# FASCICULE DE BREVET EUROPEEN

(11) **EP 3 205 951 B1**
(45) Date de publication et mention de la délivrance du brevet: **29.04.2020**
(21) Numéro de dépôt: 17155411.6
(22) Date de dépôt: 09.02.2017
(51) Int. Cl.: F24H 9/20, F24D 19/10, F24F 5/00, F24F 11/00

(54) **PROCÉDÉ DE RÉGULATION D'UN APPAREIL DE CHAUFFAGE COMPRENANT AU MOINS UN CAPTEUR DE CO2 ET AU MOINS UN DÉTECTEUR D'ABSENCE/PRÉSENCE ET APPAREIL DE CHAUFFAGE ASSOCIÉ**
VERFAHREN ZUM REGELN EINES HEIZGERÄTES MIT MINDESTENS EINEM CO2-SENSOR UND MIT MINDESTENS EINEM ANWESENHEITSSENSOR, UND ZUGEHÖRIGES HEIZGERÄT
METHOD OF CONTROLLING A HEATING APPARATUS COMPRISING AT LEAST A CO2 DETECTOR AND AT LEAST AN OCCUPANCY SENSOR, AND ASSOCIATED HEATING APPARATUS

(30) Priorité: 15.02.2016 FR 1651211
(43) Date de publication de la demande: 16.08.2017
(73) Titulaire: Thermor, 45140 Saint-Jean-de-la-Ruelle (FR)
(72) Inventeur: DELAHAYE, Guillaume, 45000 Orléans (FR); MELOT, Thomas, 45140 Ingré (FR)
(74) Mandataire: Cabinet Chaillot

(56) Documents cités:
- EP-A1- 2 930 442
- US-A- 5 395 042
- US-A1- 2013 178 987

## Description

La présente invention concerne le domaine de la régulation des appareils de chauffage, et porte en particulier sur un procédé de régulation d'un appareil de chauffage comprenant au moins un capteur de CO₂ (dioxyde de carbone) et au moins un détecteur d'absence/présence et sur un appareil de chauffage associé.

Les appareils de chauffage à effet Joule existants sont généralement capables de détecter la présence d'utilisateur(s) dans la pièce dans laquelle ils sont installés, la détection de présence d'utilisateur(s) étant généralement permise à l'aide d'informations envoyées par un détecteur d'absence/présence, typiquement un détecteur d'absence/présence de type infrarouge.

Cette solution est efficace mais peut parfois ne pas détecter efficacement ou subir de fausses détections, comme dans le cas d'une personne présente dans la pièce mais hors du champ de vision du détecteur d'absence/présence. De plus, dans le cas où un obstacle de type meuble est placé devant l'appareil de chauffage, la détection de présence d'utilisateur(s) à l'aide du détecteur d'absence/présence est rendue impossible, le détecteur d'absence/présence étant caché par l'obstacle et ne pouvant ainsi pas détecter la présence du ou des utilisateurs dans la pièce dans laquelle est installé l'appareil de chauffage. La demande de brevet américain US5395042A divulgue un procédé de régulation d'un équipement de chauffage, ventilation et conditionnement d'air (CVCA), ledit équipement comprenant un capteur de CO₂ et au moins un détecteur d'absence/ présence, l'équipement de CVCA comprenant en outre un module de régulation et un moyen de chauffage, tel que le procédé de régulation comprend les étapes suivantes: l'interrogation périodique de l'au moins un capteur de CO₂ et de l'au moins un détecteur d'absence/présence, et l'actionnement du moyen de chauffage. Cependant, le capteur de CO₂ n'est pas configuré pour détecter une présence d'utilisateur(s).

La demande de brevet américain US2013/178987A1 divulgue un système de purification d'air pour un système CVCA, le système CVCA comprenant un capteur de niveau de contaminant (tel que le CO₂) et un purificateur de CO₂ pour la régénération de l'air. Cependant, le capteur de CO₂ de ce système CVCA est uniquement configuré pour déclencher un mode de purification d'air du système CVCA, et n'est pas configuré pour détecter une présence d'utilisateur(s).

La présente invention vise à résoudre les inconvénients de l'état antérieur de la technique, en proposant un procédé de régulation d'un appareil de chauffage selon la revendication 1. Selon l'invention, l'appareil de chauffage comprend au moins un capteur de CO₂ utilisé pour détecter la présence d'utilisateur(s) et au moins un autre détecteur d'absence/présence choisi parmi un capteur de mouvement infrarouge, un capteur de mouvement à ultrasons, sonore ou une combinaison de ces capteurs, le procédé consistant entre autres à actionner le moyen de chauffage de l'appareil de chauffage lorsqu'au moins un parmi l'au moins un capteur de CO₂ et l'au moins un détecteur d'absence/présence détecte une présence d'utilisateur(s), ce qui permet de rendre plus robuste la détection de présence d'utilisateur(s) de l'appareil de chauffage.

Il est bien entendu que l'action sur le moyen de chauffage lors d'une détection de présence peut varier : ainsi, si le chauffage fonctionne déjà, ou si celui-ci est coupé parce-que la période de l'année rend inutile le chauffage, la détection de présence ne modifiera pas le fonctionnement du moyen de chauffage entre le moment avant détection et le moment après détection. En revanche, si le chauffage ne fonctionnait pas avant la détection de présence et que le chauffage est requis, la détection d'une présence entraînera la mise en route du moyen de chauffage pour émettre de la chaleur. Dans tous les cas, le module de régulation déterminera l'action à effectuer sur le moyen de chauffage en fonction de consignes/programmes/instructions prédéterminées.

La présente invention propose également un appareil de chauffage comprenant un module de régulation configuré pour mettre en œuvre le procédé de régulation selon la présente invention.

La présente invention a donc pour objet un procédé de régulation d'un appareil de chauffage comprenant au moins un capteur de CO₂ utilisé pour détecter la présence d'utilisateur(s) et au moins un autre détecteur d'absence/présence choisi parmi un capteur de mouvement infrarouge, un capteur de mouvement à ultrasons, sonore ou une combinaison de ces capteurs, l'appareil de chauffage comprenant en outre un module de régulation et un moyen de chauffage, caractérisé par le fait que le procédé de régulation comprend les étapes suivantes : l'interrogation périodique de l'au moins un capteur de CO₂ et de l'au moins un détecteur d'absence/présence concernant une détection de présence d'utilisateur(s) ; et l'actionnement du moyen de chauffage lorsqu'au moins un parmi l'au moins un capteur de CO₂ et l'au moins détecteur d'absence/présence détecte une présence d'utilisateur(s).

Ainsi, l'association d'au moins un détecteur d'absence/présence et d'au moins un capteur de CO₂ permet de gagner en robustesse sur la détection de présence d'utilisateur(s) .

La période d'interrogation de l'au moins un capteur de CO₂ et de l'au moins un détecteur d'absence/présence est de préférence comprise entre 10 et 600 secondes.

Lorsqu'un obstacle de type meuble est placé devant l'appareil de chauffage de telle sorte que le détecteur d'absence/présence ne peut plus détecter une présence d'utilisateur(s) car l'obstacle obstrue le champ de vision du détecteur d'absence/présence, la mesure du taux de CO₂ par l'au moins un capteur de CO₂ permet ainsi de détecter une présence d'utilisateur(s). En effet, une augmentation du taux de CO₂ permet de détecter une présence d'utilisateur(s) dans la pièce lorsqu'un obstacle est placé devant le détecteur d'absence/présence.

Lorsqu'aucun obstacle n'est placé devant le détecteur d'absence/présence, le moyen de chauffage est actionné dès que l'un des deux types de capteur détecte une présence d'utilisateur(s), afin d'améliorer le confort du ou des utilisateurs. Ainsi, lorsqu'au moins un utilisateur est dans le champ de vision du détecteur d'absence/présence, le détecteur d'absence/présence détectera une présence d'utilisateur(s) avant le capteur de CO₂, et lorsqu'au moins un utilisateur est présent dans la pièce mais n'est pas dans le champ de vision du détecteur d'absence/présence, le capteur de CO₂ détectera une présence d'utilisateur(s) avant le détecteur d'absence/présence.

Lorsqu'aucun des capteurs ne détecte une présence d'utilisateur(s), le moyen de chauffage n'est pas actionné, afin de réaliser une économie d'énergie.

En ce qui concerne la détection de présence par l'au moins capteur de CO₂, elle peut être assurée par la mesure du taux de CO₂ car dès qu'une personne rentre dans une pièce, elle émet du CO₂ de manière que sa concentration ne cesse d'augmenter jusqu'à atteindre une stabilisation. Ainsi, on dispose d'une information supplémentaire permettant de fiabiliser la détection obtenue jusqu'à lors par le biais du détecteur d'absence/présence de type capteur de mouvement.

Selon une caractéristique particulière de l'invention, l'au moins un capteur de CO₂ détecte une présence d'utilisateur(s) lorsque la vitesse d'augmentation du taux de CO₂ mesuré par l'au moins un capteur de CO₂ est supérieure à un seuil S1 d'augmentation de taux de CO₂.

Ainsi, la vitesse d'augmentation du taux de CO₂ est utilisée pour détecter la présence d'utilisateur(s) dans la pièce dans laquelle est installé l'appareil de chauffage.

Dès que la vitesse d'augmentation du taux de CO₂ dépasse le seuil S1, le moyen de chauffage de l'appareil de chauffage est actionné, les valeurs de vitesse d'augmentation du taux de CO₂ inférieures à S1 étant des fluctuations de taux de CO₂ habituelles de la vie quotidienne.

Selon une caractéristique particulière de l'invention, le seuil S1 d'augmentation de taux de CO₂ est compris entre 0,5 et 20 ppm par minute, de préférence égal à 1 ppm par minute.

Ainsi, lorsque la vitesse d'augmentation du taux de CO₂ est supérieure à 1ppm par minute, on estime que l'augmentation est suffisamment importante et rapide pour en déduire une détection de présence d'utilisateur(s).

Selon une caractéristique particulière de l'invention, l'au moins un capteur de CO₂ détecte une présence d'utilisateur(s) lorsque le taux de CO₂ mesuré par l'au moins un capteur de CO₂ se stabilise à une valeur supérieure à un seuil S2 de stabilisation de taux de CO₂.

Ainsi, lorsque la vitesse d'augmentation du taux de CO₂ est inférieure au seuil S1 mais que le taux de CO₂ se stabilise à une valeur supérieure au seuil S2, on en déduit une détection de présence d'utilisateur(s).

Si le taux de CO₂ se stabilise à une valeur inférieure au seuil S2, on estime que le taux de CO₂ est à une valeur habituelle de la vie quotidienne et on ne détecte pas de présence d'utilisateur(s).

Tant que la valeur de stabilisation du taux de CO₂ est supérieure au seuil S2, le moyen de chauffage est actionné afin de garantir le confort de l'utilisateur.

Selon une caractéristique particulière de l'invention, le seuil S2 de stabilisation de taux de CO₂ est compris entre 200 et 1000 ppm, et est de préférence égal à 800 ppm.

Le seuil de 800 ppm est fixé par défaut, mais peut avantageusement être évolutif en fonction des variations observées dans la pièce ou plus généralement le logement dans lequel se situe la pièce.

L'évolution du seuil de 800 ppm peut par exemple être la suivante : une moyenne glissante est effectuée sur 20 jours de paliers de stabilisation les plus longs.

Cette moyenne est corrigée par multiplication par un coefficient de sécurité de ¾ dont est soustrait le taux de CO₂ au niveau du plancher, à savoir 350ppm.

La synthèse de la loi est la suivante :
¾ ^{∗} (Moyenne 20 jours) - 350ppm

Le seuil affiné selon cette évolution permet une meilleure détection par le capteur de CO₂.

Ainsi, lorsque la valeur de stabilisation du taux de CO₂ est supérieure à 800 ppm, on estime que cette valeur est suffisamment importante pour en déduire une détection de présence d'utilisateur(s).

La présente invention a également pour objet un appareil de chauffage comprenant au moins un capteur de CO₂ utilisé pour détecter la présence d'utilisateur(s) et au moins un autre détecteur d'absence/présence choisi parmi un capteur de mouvement infrarouge, un capteur de mouvement à ultrasons, sonore ou une combinaison de ces capteurs, l'appareil de chauffage comprenant en outre un moyen de chauffage et un module de régulation, caractérisé par le fait que le module de régulation est configuré pour mettre en œuvre le procédé décrit ci-dessus.

Ainsi, l'association d'au moins un détecteur d'absence/présence et d'au moins un capteur de CO₂ permet de rendre la détection de présence d'utilisateur(s) de l'appareil de chauffage plus robuste, le moyen de chauffage étant actionné lorsque l'un des deux types de capteur détecte une présence d'utilisateur(s).

Selon une caractéristique particulière de l'invention, l'au moins un capteur de CO₂ est au moins un parmi un capteur de CO₂ par infrarouge de type acoustique ou photométrique.

Selon une caractéristique particulière de l'invention, le moyen de chauffage est au moins un parmi un corps de chauffe par convection tel qu'un corps de chauffe en fonte ou en aluminium, un corps de chauffe par rayonnement tel qu'un film chauffant, collé sur la paroi interne de la façade du radiateur.

Selon une première variante de l'invention, le module de régulation est mis en œuvre de manière analogique.

Ainsi, le module de régulation peut être mis en œuvre par une unité de traitement analogique comprenant des composants électroniques discrets, tels que des résistances, des condensateurs, des inductances, des diodes et/ou des transistors, disposés sur une carte électronique.

Selon une seconde variante de l'invention, le module de régulation est mis en œuvre de manière numérique.

Ainsi, le module de régulation peut être mis en œuvre par un microcontrôleur ou toute autre unité de traitement numérique comprenant au moins l'un parmi un processeur, un microprocesseur, un microcontrôleur, un processeur de signaux numériques (DSP), ou un composant logique programmable de type matrice prédiffusée programmable (FPGA) ou composant à application spécifique (ASIC), et de la mémoire.

Selon une autre variante de l'invention, le module de régulation est mis en œuvre de manière analogique et numérique.

Il est à noter que le module de régulation pourrait également être configuré pour réguler la puissance de chauffe du moyen de chauffage en fonction de la température mesurée par une sonde de température de l'appareil de chauffage, sans s'écarter du cadre de la présente invention.

Pour mieux illustrer l'objet de la présente invention, on va en décrire ci-après, à titre illustratif et non limitatif, un mode de réalisation préféré, avec référence aux dessins annexés.

Sur ces dessins :
- la Figure 1 est un schéma de principe d'un appareil de chauffage selon la présente invention ; et
- la Figure 2 est un organigramme illustrant un procédé de régulation de l'appareil de chauffage selon la présente invention.

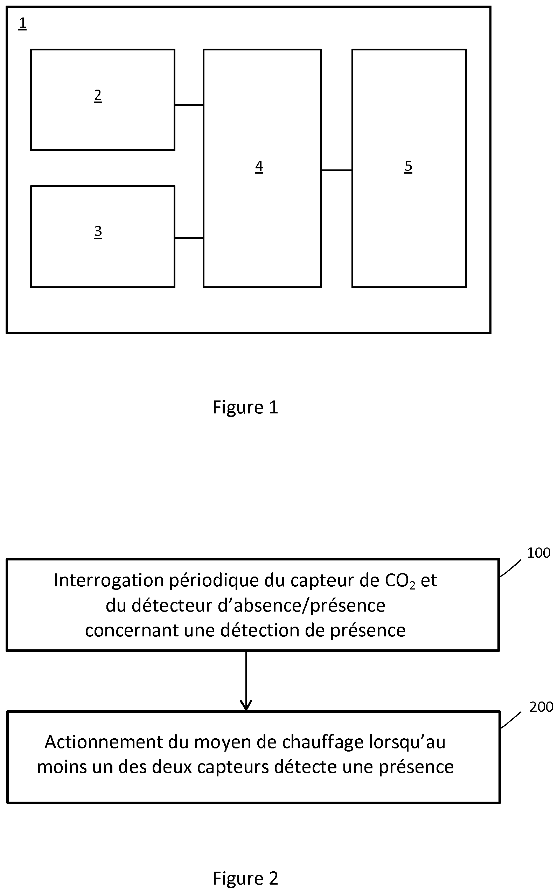

Si l'on se réfère à la Figure 1, on peut voir qu'il y est représenté un appareil de chauffage 1 selon la présente invention.

L'appareil de chauffage 1 comprend un capteur de CO₂ 2 utilisé pour détecter la présence d'utilisateur(s), et un autre détecteur d'absence/présence 3.

Il est à noter que l'appareil de chauffage 1 pourrait également comprendre plusieurs capteurs de CO₂ 2 utilisés pour détecter la présence d'utilisateurs, et le cas échéant plusieurs détecteurs d'absence/présence 3, sans s'écarter du cadre de la présente invention.

L'appareil de chauffage 1 comprend en outre un module de régulation 4 et un moyen de chauffage 5, le module de régulation 4 étant relié de manière filaire et/ou de manière sans fil au capteur de CO₂ 2, au détecteur d'absence/présence 3 et au moyen de chauffage 5.

Le capteur de CO₂ 2 est un parmi un capteur de CO₂ par infrarouge de type acoustique ou photométrique.

Le détecteur d'absence/présence 3 est un parmi un capteur de mouvement infrarouge, un capteur de mouvement à ultrasons, sonore ou une combinaison de ces capteurs.

Le moyen de chauffage 5 est au moins un parmi un corps de chauffe par convection tel qu'un corps de chauffe en fonte, un corps de chauffe par rayonnement tel qu'un film chauffant, collé sur la paroi interne de la façade du radiateur.

Le module de régulation 4 est configuré pour mettre en œuvre un procédé de régulation de l'appareil de chauffage 1, permettant d'actionner le moyen de chauffage 5 lorsqu'au moins l'un du capteur de CO₂ 2 et du détecteur d'absence/présence 3 détecte une présence d'utilisateur(s), ledit procédé de régulation étant décrit plus en détail à la Figure 2.

Ainsi, l'association du détecteur d'absence/présence 3 et du capteur de CO₂ 2 permet de rendre la détection de présence d'utilisateur(s) de l'appareil de chauffage 1 plus robuste.

Il est à noter que le module de régulation 4 pourrait également être configuré pour réguler la puissance de chauffe du moyen de chauffage 5 en fonction de la température mesurée par une sonde de température (non représentée à la Figure 1) de l'appareil de chauffage 1, sans s'écarter du cadre de la présente invention.

Le module de régulation 4 est mis en œuvre de manière numérique par un microcontrôleur avec de la mémoire.

Il est à noter que le module de régulation 4 pourrait également être mis en œuvre de manière numérique par toute autre unité de traitement numérique comprenant au moins l'un parmi un processeur, un microprocesseur, un microcontrôleur, un processeur de signaux numériques (DSP), ou un composant logique programmable de type matrice prédiffusée programmable (FPGA) ou composant à application spécifique (ASIC), et de la mémoire.

Il est à noter que le module de régulation 4 pourrait également être mis en œuvre de manière analogique par une unité de traitement analogique comprenant des composants électroniques discrets, tels que des résistances, des condensateurs, des inductances, des diodes et/ou des transistors, disposés sur une carte électronique, sans s'écarter du cadre de la présente invention, ou être mis en œuvre de manière combinée analogique et numérique.

Si l'on se réfère à la Figure 2, on peut voir qu'il y est représenté un organigramme illustrant le procédé de régulation de l'appareil de chauffage 1.

Le procédé de régulation de l'appareil de chauffage 1 comprend les étapes suivantes :
- l'interrogation périodique 100 du capteur de CO₂ 2 et du détecteur d'absence/présence 3 de l'appareil de chauffage 1, concernant une détection de présence d'utilisateur(s) ; et
- l'actionnement 200 du moyen de chauffage 5 de l'appareil de chauffage 1 lorsqu'au moins un parmi le capteur de CO₂ 2 et le détecteur d'absence/présence 3 détecte une présence d'utilisateur(s).

Ainsi, la détection de présence d'utilisateur(s) est rendue plus robuste.

La période d'interrogation du capteur de CO₂ 2 et du détecteur d'absence/présence 3 est de préférence comprise entre 10 et 600 secondes.

Ainsi, lorsqu'un obstacle tel qu'un meuble est placé devant le détecteur d'absence/présence 3 de l'appareil de chauffage 1 de telle sorte que le détecteur d'absence/présence 3 ne peut plus détecter une présence d'utilisateur(s), la mesure du taux de CO₂ par le capteur de CO₂ 2 permet de détecter une présence d'utilisateur(s). En effet, une augmentation du taux de CO₂ permet de détecter une présence d'utilisateur(s) dans la pièce dans laquelle l'appareil de chauffage 1 est installé.

Lorsqu'aucun obstacle n'est placé devant le détecteur d'absence/présence 3, le moyen de chauffage 5 est actionné dès que l'un des deux types de capteur 2 et 3 détecte une présence d'utilisateur(s), afin d'améliorer le confort du ou des utilisateurs présents dans la pièce. Ainsi, lorsqu'au moins un utilisateur est dans le champ de vision du détecteur d'absence/présence 3, le détecteur d'absence/présence 3 détectera une présence d'utilisateur(s) avant le capteur de CO₂ 2, tandis que lorsqu'au moins un utilisateur est présent dans la pièce mais n'est pas dans le champ de vision du détecteur d'absence/présence 3, le capteur de CO₂ 2 détectera une présence d'utilisateur(s) avant le détecteur d'absence/présence 3.

La détection de présence par le capteur de CO₂ 2 est assurée par la mesure du taux de CO₂. En effet, dès qu'une personne rentre dans une pièce, elle émet du CO₂ de manière que sa concentration ne cesse d'augmenter jusqu'à atteindre une stabilisation. Ainsi, on dispose d'une information supplémentaire permettant de fiabiliser la détection obtenue jusqu'à lors par le biais du détecteur d'absence/présence 3 de type capteur de mouvement.

Le capteur de CO₂ 2 détecte une présence d'utilisateur(s) lorsque la vitesse d'augmentation du taux de CO₂ mesuré par le capteur de CO₂ 2 est supérieure à un seuil S1 d'augmentation de taux de CO₂.

Dès que la vitesse d'augmentation du taux de CO₂ dépasse le seuil S1, le module de régulation 4 actionne le moyen de chauffage 5 de l'appareil de chauffage 1, les valeurs de vitesse d'augmentation du taux de CO₂ inférieures à S1 étant des fluctuations de taux de CO₂ habituelles de la vie quotidienne.

Le seuil S1 d'augmentation de taux de CO₂ est de préférence égal à 1 ppm par minute.

Ainsi, lorsque la vitesse d'augmentation du taux de CO₂ est supérieure à 1 ppm par minute, on estime que l'augmentation est suffisamment importante et rapide pour en déduire une détection de présence d'utilisateur(s).

Il est à noter que le seuil S1 pourrait également être compris entre 0,5 et 20ppmpar minute, sans s'écarter du cadre de la présente invention.

Le capteur de CO₂ 2 détecte également une présence d'utilisateur(s) lorsque le taux de CO₂ mesuré par le capteur de CO₂ 2 se stabilise à une valeur supérieure à un seuil S2 de stabilisation de taux de CO₂.

Ainsi, lorsque la vitesse d'augmentation du taux de CO₂ est inférieure au seuil S1 mais que le taux de CO₂ se stabilise à une valeur supérieure au seuil S2, on en déduit une détection de présence d'utilisateur(s).

Si le taux de CO₂ se stabilise à une valeur inférieure au seuil S2, on estime que le taux de CO₂ est à une valeur habituelle de la vie quotidienne et on ne détecte pas de présence d'utilisateur(s).

Tant que la valeur de stabilisation du taux de CO₂ est supérieure au seuil S2, le module de régulation 4 actionne le moyen de chauffage 5 afin de garantir le confort de l'utilisateur.

Le seuil S2 de stabilisation de taux de CO₂ est de préférence égal à 800 ppm.

Ainsi, lorsque la valeur de stabilisation du taux de CO₂ est supérieure à 800 ppm, on estime que cette valeur est suffisamment importante pour en déduire une détection de présence d'utilisateur(s).

Il est à noter que le seuil S2 pourrait également être compris entre 200 et 1000 ppm, en fonction de la loi choisie, sans s'écarter du cadre de la présente invention.

La détection de présence d'utilisateur(s) par stabilisation du taux de CO₂ est de préférence déterminée après stabilisation du taux de CO₂ pendant 10 périodes d'interrogation, de préférence sur une période d'environ 10 min.

## Revendications

1. Procédé de régulation d'un appareil de chauffage (1) comprenant au moins un capteur de CO₂ (2) utilisé pour détecter la présence d'utilisateur(s) et au moins un autre détecteur d'absence/présence (3) choisi parmi un capteur de mouvement infrarouge, un capteur de mouvement à ultrasons, sonore ou une combinaison de ces capteurs, l'appareil de chauffage (1) comprenant en outre un module de régulation (4) et un moyen de chauffage (5), tel que le procédé de régulation comprend les étapes suivantes :
- l'interrogation périodique (100) de l'au moins un capteur de CO2 (2) et de l'au moins un détecteur d'absence/présence (3) concernant une détection de présence d'utilisateur(s) ; et
- l'actionnement (200) du moyen de chauffage (5) lorsqu'au moins un parmi l'au moins un capteur de CO₂ (2) et l'au moins détecteur d'absence/présence (3) détecte une présence d'utilisateur(s).

2. Procédé de régulation selon la revendication 1, **caractérisé par le fait que** l'au moins un capteur de CO₂ (2) détecte une présence d'utilisateur(s) lorsque la vitesse d'augmentation du taux de CO₂ mesuré par l'au moins un capteur de CO₂ (2) est supérieure à un seuil S1 d'augmentation de taux de CO₂.

3. Procédé de régulation selon la revendication 2, **caractérisé par le fait que** le seuil S1 d'augmentation de taux de CO₂ est compris entre 0,5 et 20 ppm par minute, de préférence égal à 1 ppm par minute,

4. Procédé de régulation selon l'une des revendications 1 à 3, **caractérisé par le fait que** l'au moins un capteur de CO₂ (2) détecte une présence d'utilisateur(s) lorsque le taux de CO₂ mesuré par l'au moins un capteur de CO₂ (2) se stabilise à une valeur supérieure à un seuil S2 de stabilisation de taux de CO₂.

5. Procédé de régulation selon la revendication 4, **caractérisé par le fait que** le seuil S2 de stabilisation de taux de CO₂ est compris entre 200 et 1000 ppm, et est de préférence égal à 800ppm.

6. Appareil de chauffage (1) comprenant au moins un capteur de CO₂ (2) utilisé pour détecter la présence d'utilisateur(s) et au moins un autre détecteur d'absence/présence (3) choisi parmi un capteur de mouvement infrarouge, un capteur de mouvement à ultrasons, sonore ou une combinaison de ces capteurs, l'appareil de chauffage (1) comprenant en outre un moyen de chauffage (5) et un module de régulation (4), **caractérisé par le fait que** le module de régulation (4) est configuré pour mettre en œuvre le procédé selon l'une des revendications 1 à 5.

7. Appareil de chauffage (1) selon la revendication 6, **caractérisé par le fait que** l'au moins un capteur de CO₂ (2) est au moins un parmi un capteur de CO₂ par infrarouge de type acoustique ou photométrique.

8. Appareil de chauffage (1) selon l'une des revendications 6 à 7, **caractérisé par le fait que** le moyen de chauffage (5) est au moins un parmi un corps de chauffe par convection et un corps de chauffe par rayonnement.

9. Appareil de chauffage selon l'une des revendications 6 à 8, **caractérisé par le fait que** le module de régulation (4) est mis en œuvre de manière analogique.

10. Appareil de chauffage selon l'une des revendications 6 à 8, **caractérisé par le fait que** le module de régulation (4) est mis en œuvre de manière numérique.

## Patentansprüche

1. Verfahren zum Regeln eines Heizgeräts (1), umfassend mindestens einen CO₂-Sensor (2), der verwendet wird, um die Anwesenheit eines Nutzers/von Nutzern zu ermitteln, und mindestens einen anderen Anwesenheits-/Abwesenheits-Detektor (3), ausgewählt aus einem Infrarot-Bewegungssensor, einem Ultraschall-, akustischen Bewegungssensor oder einer Kombination dieser Sensoren, wobei das Heizgerät (1) ferner ein Regelmodul (4) und ein Heizmittel (5) umfasst, so dass das Regelverfahren die folgenden Schritte umfasst:
- periodisches Abfragen (100) des mindestens einen CO₂-Sensors (2) und des mindestens einen Anwesenheits-/Abwesenheits-Detektors (3) bezüglich einer Anwesenheitsdetektion eines Nutzers/von Nutzern; und
- Betätigen (200) des Heizmittels (5), wenn mindestens einer von dem mindestens einen CO₂-Sensor (2) und dem mindestens einen Anwesenheits-/Abwesenheits-Detektor (3) eine Anwesenheit eines Nutzers/von Nutzern ermittelt.

2. Regelverfahren nach Anspruch 1, **dadurch gekennzeichnet, dass** der mindestens eine CO₂-Sensor (2) eine Anwesenheit eines Nutzers/von Nutzern ermittelt, wenn die Geschwindigkeit der Erhöhung des CO₂-Gehalts, gemessen von dem mindestens einen CO₂-Sensor (2), über einem Grenzwert S1 der Erhöhung des CO₂-Gehalts liegt.

3. Regelverfahren nach Anspruch 2, **dadurch gekennzeichnet, dass** der Grenzwert S1 der Erhöhung des CO₂-Gehalts zwischen 0,5 und 20 ppm je Minute, vorzugsweise bei gleich 1 ppm je Minute, liegt.

4. Regelverfahren nach einem der Ansprüche 1 bis 3, **dadurch gekennzeichnet, dass** der mindestens eine CO₂-Sensor (2) eine Anwesenheit eines Nutzers/von Nutzern ermittelt, wenn sich der von dem mindestens einen CO₂-Sensor (2) gemessene CO₂-Gehalt auf einem Wert stabilisiert, der über einem Grenzwert S2 der CO₂-Gehaltsstabilisierung liegt.

5. Regelverfahren nach Anspruch 4, **dadurch gekennzeichnet, dass** der Grenzwert S2 der CO₂-Gehaltsstabilisierung zwischen 200 und 1000 ppm liegt und vorzugsweise 800 ppm beträgt.

6. Heizgerät (1), umfassend mindestens einen CO₂-Sensor (2), der verwendet wird, um die Anwesenheit eines Nutzers/von Nutzern zu ermitteln, und mindestens einen anderen Anwesenheits-/Abwesenheits-Detektor (3), ausgewählt aus einem Infrarot-Bewegungssensor, einem Ultraschall-, akustischen Bewegungssensor oder einer Kombination dieser Sensoren, wobei das Heizgerät (1) ferner ein Heizmittel (5) und ein Regelmodul (4) umfasst, **dadurch gekennzeichnet, dass** das Regelmodul (4) konfiguriert ist, um das Verfahren nach einem der Ansprüche 1 bis 5 durchzuführen.

7. Heizgerät (1) nach Anspruch 6, **dadurch gekennzeichnet, dass** der mindestens eine CO₂-Sensor (2) mindestens einer von einem CO₂-Infrarotsensor vom akustischen oder photometrischen Typ ist.

8. Heizgerät (1) nach einem der Ansprüche 6 bis 7, **dadurch gekennzeichnet, dass** das Heizmittel (5) mindestens eins von einem Konvektionsheizkörper und einem Strahlungsheizkörper ist.

9. Heizgerät nach einem der Ansprüche 6 bis 8, **dadurch gekennzeichnet, dass** das Regelmodul (4) analog umgesetzt wird.

10. Heizgerät nach einem der Ansprüche 6 bis 8, **dadurch gekennzeichnet, dass** das Regelmodul (4) digital umgesetzt wird.

## Claims

1. A method for controlling a heating apparatus (1) comprising at least one CO₂ sensor (2) used to detect the presence of user(s) and at least one other absence/presence detector (3) chosen from among an infrared movement sensor, an ultrasound or sound movement sensor or a combination of these sensors, the heating apparatus (1) further comprising a control module (4) and a heating means (5), such that the control method comprises the following steps:
- periodically querying (100) the at least one CO₂ sensor (2) and the at least one absence/presence detector (3) regarding a detection of the presence of user(s); and
- actuating (200) the heating means (5) when at least one among the at least one CO₂ sensor (2) and the at least one absence/presence detector (3) detects a presence of user(s).

2. The control method according to claim 1, **characterized in that** the at least one CO₂ sensor (2) detects a presence of user(s) when the speed of increase of the CO₂ level measured by the at least one CO₂ sensor (2) is above a CO₂ level increase threshold S1.

3. The control method according to claim 2, **characterized in that** the CO₂ level increase threshold S1 is between 0.5 and 20 ppm per minute, preferably equal to 1 ppm per minute.

4. The control method according to one of claims 1 to 3, **characterized in that** the at least one CO₂ sensor (2) detects a presence of user(s) when the CO₂ level measured by the at least one CO₂ sensor (2) stabilizes at a value above a CO₂ level stabilization threshold S2.

5. The control method according to claim 4, **characterized in that** the CO₂ level stabilization threshold S2 is between 200 and 1000 ppm, and is preferably equal to 800 ppm.

6. A heating apparatus (1) comprising at least one CO₂ sensor (2) used to detect the presence of user(s) and at least one other absence/presence detector (3) chosen from among an infrared movement sensor, an ultrasound or sound movement sensor or a combination of these sensors, the heating apparatus (1) further comprising a heating means (5) and a control module (4), **characterized in that** the control module (4) is configured to carry out the method according to one of claims 1 to 5.

7. The heating apparatus (1) according to claim 6, **characterized in that** the at least one CO₂ sensor (2) is at least one from among an infrared CO₂ sensor of the acoustic or photometric type.

8. The heating apparatus (1) according to one of claims 6 to 7, **characterized in that** the heating means (5) is at least one from among a heating body by convection and a heating body by radiation.

9. The heating apparatus according to one of claims 6 to 8, **characterized in that** the control module (4) is implemented in an analog manner.

10. The heating apparatus according to one of claims 6 to 8, **characterized in that** the control module (4) is implemented digitally.
